Europäisches Patentamt

European Patent Office

Office européen des brevets

(11) Numéro de publication: **0 192 904**
**B1**

# (12) FASCICULE DE BREVET EUROPÉEN

(45) Date de publication du fascicule du brevet:
25.10.89

(21) Numéro de dépôt: **85402549.1**

(22) Date de dépôt: **19.12.85**

(51) Int. Cl.⁴: **A 01 F 15/14**

(54) **Presse à fourrage pour la production de balles roulées avec mécanisme de liage.**

(30) Priorité: **25.01.85 FR 8501032**

(43) Date de publication de la demande:
**03.09.86 Bulletin 86/36**

(45) Mention de la délivrance du brevet:
**25.10.89 Bulletin 89/43**

(84) Etats contractants désignés:
**DE GB**

(56) Documents cité:
**DE-A-2 620 807**
**FR-A-2 414 295**
**US-A-2 971 455**
**US-A-3 064 556**

(73) Titulaire: **RIVIERRE CASALIS, 55 Avenue Ampère,**
**F-45800 St Jean de Braye (FR)**

(72) Inventeur: **Mouret, Patrick, 328, rue de la Garenne,**
**F-45660 Mardie (FR)**

(74) Mandataire: **Hirsch, Marc- Roger, Cabinet Hirsch**
**34 rue de Bassano, F-75008 Paris (FR)**

## Description

La présente invention concerne une presse à fourrage pour la production de balles roulées, du type présentant une chambre de formage dans laquelle le fourrage introduit sous la forme d'une nappe est enroulé sur lui-même autour d'un axe horizontal fictif et, monté sur un support, un mécanisme de liage à deux bras de guidage de liens qui possèdent chacun une sortie pour des liens et qui sont montés mobiles sous l'action d'un moyen de commande pour effectuer un déplacement alternatif le long de la chambre de formage à partir d'une position de départ de liage près d'une extrémité de la chambre jusqu'à une position de fin de liage près de l'extrémité opposée de la chambre, un organe d'actionnement comprenant une bielle oscillante articulée sur le support étant interposé mécaniquement entre le moyen de commande et les distributeurs pour entraîner ces distributeurs de la position de départ de liage jusqu'à la position de fin de liage où un moyen de sectionnement coupe les liens, puis pour rappeler les distributeurs vers la position de départ.

DE-A-2 620 807 décrit un mécanisme de liage d'une balle roulée, à l'aide de ficelle et qui comprend deux distributeurs de ficelle qui se déplacent en rotation à partir d'une position de départ par traction sur un câble agissant sur des biellettes jusqu'à une position de fin de liage où les ficelles sont liées puis séparées du rouleau de ficelle, le relâchement du câble autorisant le retour, par gravité, des distributeurs vers leur position de départ.

De même, FR-A-2 414 295 décrit un procédé pour lier une balle ronde au moyen d'un bras de guidage destiné à guider la ficelle servant de lien sur une ramasseuse-enrouleuse, dans lequel sensiblement à la fin du processus de pressage, le bras de guidage est tout d'abord déplacé automatiquement de sa position de base dans une position de départ, tandis que pendant ce déplacement, le début de la ficelle est introduit dans l'espace de pressage et lorsque le bras de guidage a atteint la position de départ et que le début de la ficelle a été introduit dans l'espace de pressage, le bras de guidage est ramené dans sa position extrême, au moins sur la largeur de la balle ronde qui doit être ficelée, et pendant ce temps la ficelle est enroulée plusieurs fois au même endroit autour de la balle au niveau des extrémités et en hélice entre ces extrémités, le mouvement de retour s'effectuant sur une période de temps plus longue que celle nécessaire pour le déplacement du bras de guidage de la ficelle dans sa position de départ.

De tels mécanismes de liage permettant d'obtenir une balle dont la stabilité de forme autorise les opérations de déchargement et de manutention.

L'invention a pour objet une presse à fourrage dont le mécanisme de liage comporte des bras distributeurs de lien aisément accessibles à partir de l'extrémité de la chambre de formage et qui permettent de disposer deux liens en spirale autour d'une balle cylindrique, ce mécanisme de liage étant actionné par un moyen de commande fixé au châssis de la presse, de conception très simple et d'une construction peu coûteuse faisant intervenir une came de commande rotative dont le profil correspond au cycle de liage dans le but d'asservir la longueur du lien à la vitesse de rotation de la came.

Conformément à l'invention, les bras de guidage de liens sont constitués par deux tubes distributeurs de lien montés à rotation autour d'un même axe solidaire de la paroi latérale de la paroi latérale du support du mécanisme de liage et qui sont reliés à la bielle oscillante par l'intermédiaire d'un levier pivotant sur le support du mécanisme de liage et attelé à une extrémité de l'organe d'actionnement dont l'autre extrémité est articulé à l'extrémité de la bielle oscillante qui, d'une part, porte un organe d'entraînement en appui sur le profil d'une came de programmation entraînée en rotation au cours du liage et sur laquelle bielle, d'autre part, est accroché un ressort de rappel de la bielle oscillante pour appliquer l'organe d'entraînement en appui sur le profil de came de manière que la rotation de la came de programmation provoque le déplacement alternatif de l'organe d'actionnement et pour assurer le déplacement des deux tubes distributeurs décalés l'un par rapport à l'autre, la liaison mécanique entre les tubes distributeurs et l'extrémité du levier opposée à l'articulation de celui-ci sur le support du mécanisme de liage, est réalisée à l'aide d'un doigt d'entraînement qui est, d'une part, relié à une butée d'entraînement portée par le premier tube de distributeur et qui est, d'autre part, mobile dans une lumière d'une butée d'entraînement portée par le deuxième tube distributeur, de manière à permettre, au cours du déplacement de ladite extrémité du levier, d'entraîner temporairement uniquement le premier tube distributeur et par voie de conséquence successivement puis simultanément les deux tubes distributeurs.

Le mécanisme de liage ainsi réalisé assure une meilleure répartition du lien autour de la balle et offre la possibilité d'un chevauchement des liens aux extrémités de la balle sans modifier notablement la longueur de lien nécessaire au maintien de sa cohésion.

Selon un autre mode de réalisation de l'invention, la came de programmation est solidaire en rotation d'une roue dentée qui coopère avec un cliquet de commande solidaire d'une manivelle d'actionnement et l'organe d'actionnement est relié mécaniquement à un moyen d'actionnement pivotant du moyen de sectionnement.

Selon encore un autre mode de réalisation, une partie du profil de la came de programmation coopère avec l'organe d'entraînement pour modifier la position relative des tubes distributeurs. Les deux tubes distributeurs présentent alors, entre eux, un décalage angulaire réglable à l'aide d'un moyen de butée.

D'autres caractéristiques et avantages de l'invention ressortiront plus clairement de la description qui va suivre d'un exemple de réalisation, faite en référence au dessin annexé dans lequel:

- la figure 1 est une vue latérale de la presse dont on a enlevé une partie de la paroi latérale dans le but de montrer la balle en achèvement et l'implantation du mécanisme de liage;
- la figure 2 est une vue en élévation du mécanisme de liage monté sur une presse à fourrage dont on a représenté les éléments du châssis portant le mécanisme de liage;
- la figure 3 représente une vue latérale des distributeurs de lien, fixés à un élément du châssis;
- la figure 4 est une vue de détail du moyen d'entraînement des distributeurs selon le plan de coupe 4 - 4 de la figure 2;
- la figure 5 est une vue en coupe du système d'entraînement de la came de programmation selon la ligne 5 - 5 de la figure 2;
- les fig. 6 à 9 représentent schématiquement les positions successives du dispositif de liage au cours du processus de distribution et de sectionnement du lien.

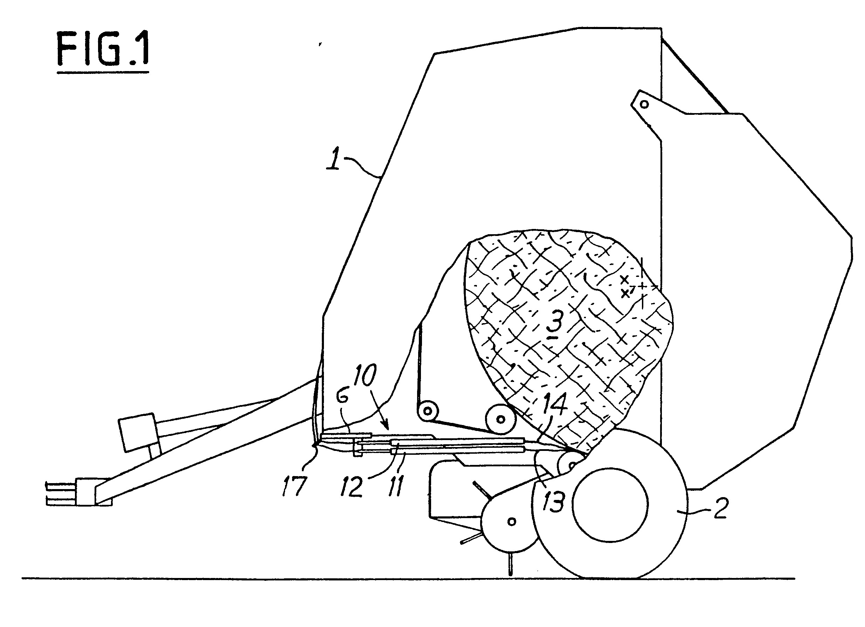

En se reportant plus particulièrement à la figure 1, la presse à fourrage dont il est question est une presse en soi connue et notamment une machine tractée comme c'est l'usage en agriculture. Elle peut être illustrée par la publication FR-A-2 460 099 déposée au nom de la demanderesse.

On retiendra essentiellement que la presse comporte un châssis 1 reposant sur le sol par l'intermédiaire de roues 2 et qui comporte une chambre de formage 3 dans laquelle le fourrage introduit sous la forme d'une nappe est enroulé sur lui-même autour d'un axe horizontal fictif XX' et un mécanisme de liage 10 monté sur un support 6. Pour des autres parties caractéristiques de la presse, il est possible de se référer à la publication FR-A-2 460 099.

Le châssis 1 comprend essentiellement deux parois latérales 4, 5 qui limitent l'étendue transversale de la chambre de formage 3 et portent le support 6 du mécanisme de liage 10.

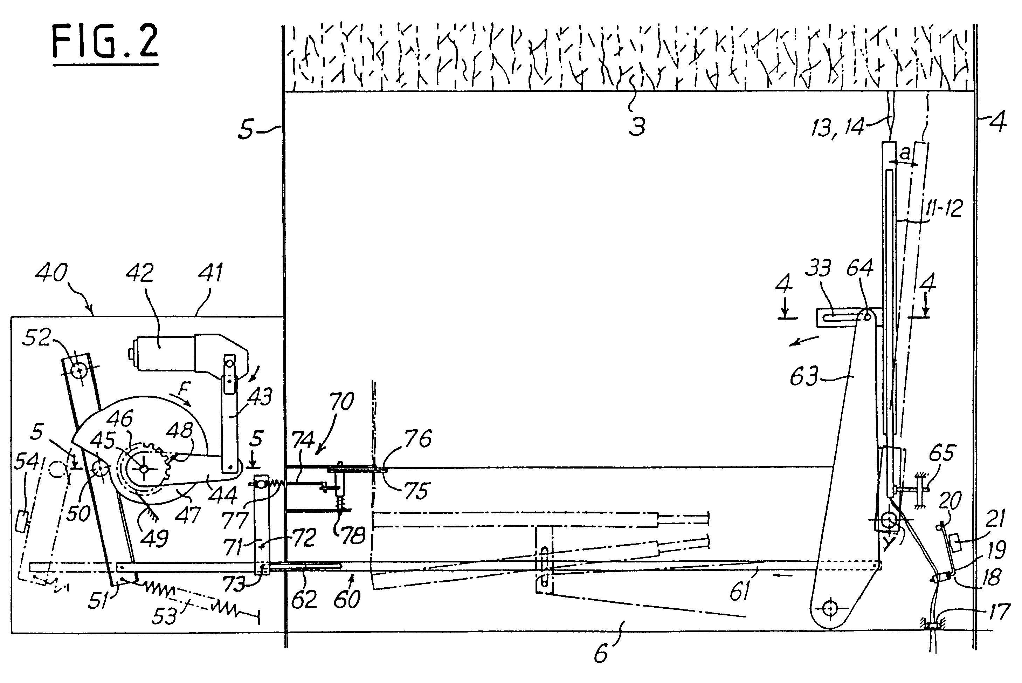

Le mécanisme de liage, mieux représenté aux figures 2 à 5, est constitué par deux tubes distributeurs 11, 12 qui présentent chacun une sortie de lien réalisé ici par des ficelles 13, 14 provenant de sources d'alimentation séparées non représentées et qui entrent dans les tubes 11, 12 par l'extrémité d'entrée 15 et en ressortant par l'extrémité de sortie 16.

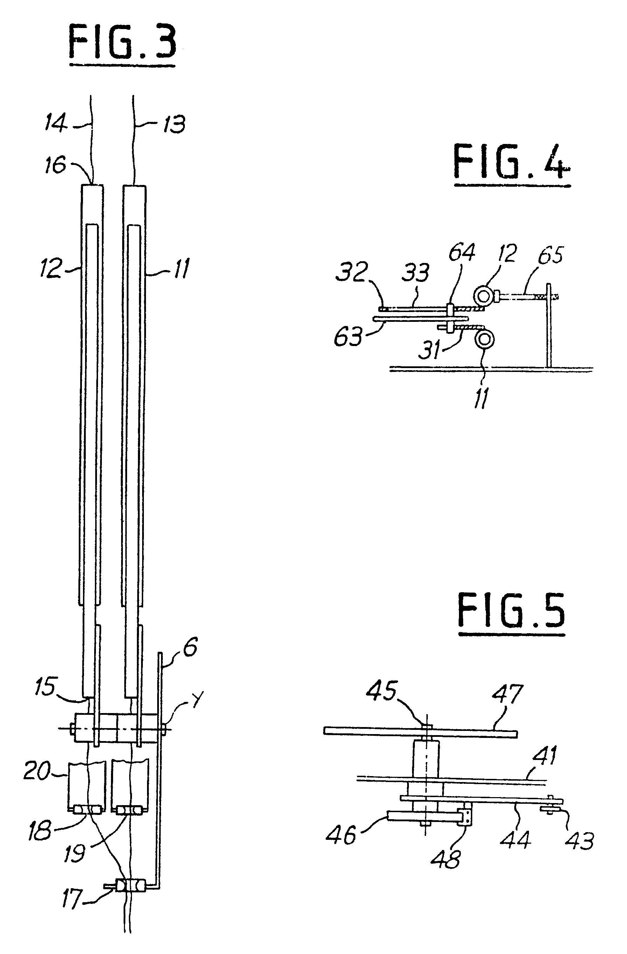

Le trajet de la ficelle représenté à la figure 2 montre que celle-ci passe en sortie des sources d'alimentation dans un guide fixe 17 et dans des guides mobiles 18, 19 montés sur le support 6 ainsi que montré aux figures 2, 3. Les guides mobiles 18, 19 sont respectivement montés sur des bras articulés 20 dont la position de repos correspond à une position de butée sur des contacteurs de fin de course 21 dont un contact ouvert en position de repos se ferme lorsque les guides quittent lesdits contacteurs sous l'action d'une force de tension exercée sur les ficelles 13, 14 par suite de la mobilité des distributeurs 11, 12 par rapport au guide fixe 17. A cet effet, les distributeurs 11, 12 sont montés à rotation autour d'un axe Y solidaire de la paroi latérale du support 6.

On décrira maintenant le moyen de commande des tubes distributeurs qui est fixé à l'autre paroi latérale 5. Ainsi que cela est représenté aux figures 2 et 5, le moyen de commande 40 est inclus dans un boîtier support 41 accolé à la paroi 5. Le boîtier 41 contient un organe moteur qui peut être constitué à titre d'exemple par un moto-réducteur électrique 42.

L'arbre de sortie du moto-réducteur 42 entraîne en rotation une bielle 43 dont la longueur est réglable par tout dispositif connu. L'extrémité de la bielle 43 porte l'axe d'entraînement d'une manivelle 44 montée à rotation autour d'un axe tournant 45 solidaire du boîtier support 41. Sur l'axe 45 est rigidement montée une roue dentée 46 et une came de programmation 47. Un système d'entraînement solidaire de la manivelle 44 est constitué par un cliquet 48 engagé sur la denture de la roue 46 pour former une roue à rochet 49 qui n'autorise la rotation de la roue dentée 46 et de la came de programmation 47 que dans un sens déterminé défini par la flèche F.

Le profil de la came de programmation 47 est en appui sur l'organe d'entraînement 50 porté par une bielle de commande 51. La bielle de commande 51 est articulée sur un axe 52 porté par le boîtier 41. L'extrémité de la bielle 51 opposée à l'axe 52 est accrochée à un ressort de rappel 53 monté en traction entre la bielle 51 et le boîtier 41. Par ailleurs, un contacteur de fin de course 54 est situé sur la trajectoire de la bielle 51 en fin de course de celle-ci lorsque l'organe d'entraînement arrive au sommet du profil de la came de programmation 47. L'extrémité de la bielle 51 porte également l'axe d'articulation d'un organe d'actionnement 60 qui sera décrit ci-après.

L'organe d'actionnement 60 est constitué par une barre de manoeuvre 61 qui s'étend à partir du boîtier 41, au travers de la paroi 5, transversalement le long de la chambre de formage 3.

La barre de manoeuvre 61 possède une prise de mouvement débrayable constituée par une lumière longitudinale 62 dans laquelle se déplace un doigt de commande d'un moyen de sectionnement 70 fixé à la paroi 5.

L'extrémité de la barre de manoeuvre 61 est accrochée à un levier 63 articulé à une extrémité autour d'un axe fixe porté par le support 6 du mécanisme de liage. L'autre extrémité du levier 63 porte un doigt d'entraînement 64 des distributeurs 11, 12.

Pour réaliser cet entraînement, le tube du distributeur 11 porte une butée d'entraînement 31 et le tube du distributeur 12 porte une butée d'entraînement 32, cette dernière étant percée d'une lumière 33 dans laquelle est engagé le doigt d'entraînement 64. Une telle disposition permet l'entraînement du tube distributeur 11 tandis que le tube distributeur 12 est temporairement en appui sur une butée 65 solidaire du support 6.

Le moyen de sectionnement 70 est constitué par un bras de commande 71 monté à rotation autour d'un axe 72 fixé au support 6 et dont l'extrémité porte un doigt de commande 73 mobile dans la lumière 62 de la barre de manoeuvre 61. Le bras de commande 71 est attelé à une tringle de commande 74 d'un couteau mobile 75. Le couteau mobile 75 est monté à rotation, autour d'un axe fixe 78, par rapport à un couteau fixe 76. Un ressort 77 monté en compression entre le bras de commande 71 et la paroi 5 entoure la tringle 74 et repousse le couteau 75.

La vitesse de rotation de la came de programmation 47, réglable en fonction de la longueur de la bielle 43, détermine la vitesse de déplacement de la barre de manoeuvre 61.

La vitesse de rotation de la came 47 pourrait être réglée par d'autres moyens tels qu'un variateur électrique ou hydraulique.

La rotation de la came 47 modifie la position initiale de la bielle de commande 51 et celle de la barre de manoeuvre 61.

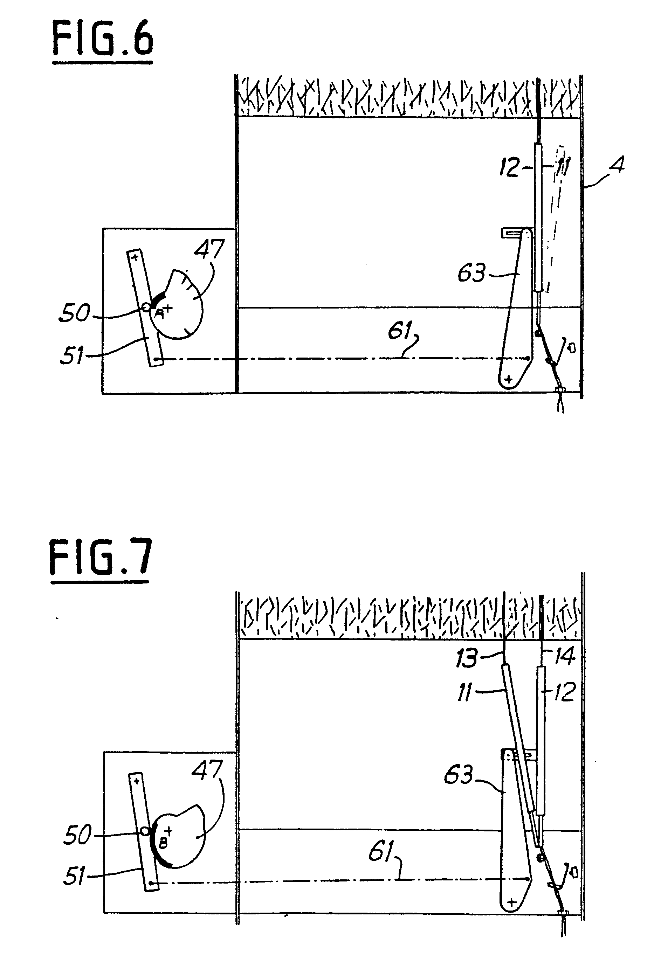

La mise en position de début de liage des tubes distributeurs 11, 12 (figure 6) s'effectue par une rotation de la came de programmation 47 au cours de laquelle la partie A du profil de came déplace l'organe d'entraînement 50 en augmentant la tension du ressort de rappel 53 de la bielle 51.

La position initiale des distributeurs 11, 12 peut soit être parallèle à la paroi 4, soit présenter un décalage angulaire initial (a) entre les distributeurs, ainsi que cela est montré en traits mixtes à la figure 2. A cet effet, un moyen de butée 65 permet de déterminer la position choisie.

Le mouvement de rotation de la balle dans la chambre 3 accroche les ficelles 13, 14 qui s'enroulent selon une ou deux spires longitudinalement décalées. La tension du lien ainsi créée exerce un effort transversal sur les guides mobiles 18, 19 et les bras 20. La libération des contacteurs de fin de course 21 permet le démarrage du cycle de liage (figure 7).

Le levier 63 déplace, par l'intermédiaire du doigt 64, le tube du distributeur 11. La ficelle 13 en sortie du tube 11 peut alors croiser la ficelle 14 en sortie du tube 12, ce qui permet d'immobiliser la ficelle 14.

Le levier 63 déplace, par l'intermédiaire du doigt 64, le tube du distributeur 11. La ficelle 13 en sortie du tube 11 commence son mouvement d'enroulement le long de la balle, tandis que la ficelle 14 s'enroule autour de la balle dans un même plan pendant un temps $t_o = \frac{1}{v}$ où 1 est la longueur de la lumière 33 et v la vitesse de déplacement linéaire du doigt d'entraînement 64.

La partie B du profil de la came de programmation déplace l'organe d'entraînement 50 et la bielle 51 (voir la figure 7). Les déplacements résultants de la barre de manoeuvre 61 et du levier 63 déplacent simultanément l'ensemble des tubes distributeurs 11, 12. Au cours de ce déplacement, les ficelles 13, 14 continuent à s'enrouler autour de la balle en une double spirale, la spirale formée par la ficelle 14 chevauchant la spirale formée par la ficelle 13, dans le but de réaliser un meilleur maintien des ficelles 13, 14 et une réduction du temps de liage.

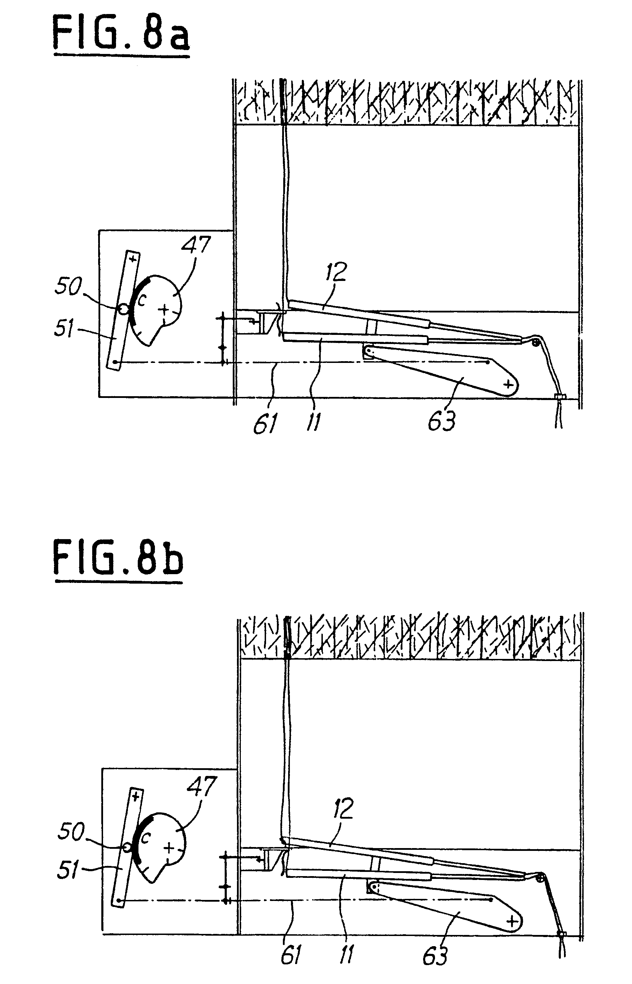

La partie C du profil de la came de programmation 47 est concentrique à l'axe de rotation 45 de celle-ci (figures 8a, 8b). La partie C du profil de la came permet donc le maintien en position de l'organe d'entraînement 50 en fin de course des distributeurs 11, 12 où les ficelles 13, 14 peuvent occuper une même position sur la balle (figure 8a) ou des positions croisées pour lesquelles la ficelle 14 immobilise la ficelle 13 (figure 8b). Dans cette position, les ficelles 13, 14 sont proches du couteau mobile 75 du moyen de sectionnement 70. L'ensemble des ficelles 13, 14 s'enroule pendant un temps déterminé dans un même plan de la balle pendant la durée du défilement de la partie C du profil devant l'organe d'entraînement 50. Cette phase du processus assure une tenue correcte du lien sur la balle.

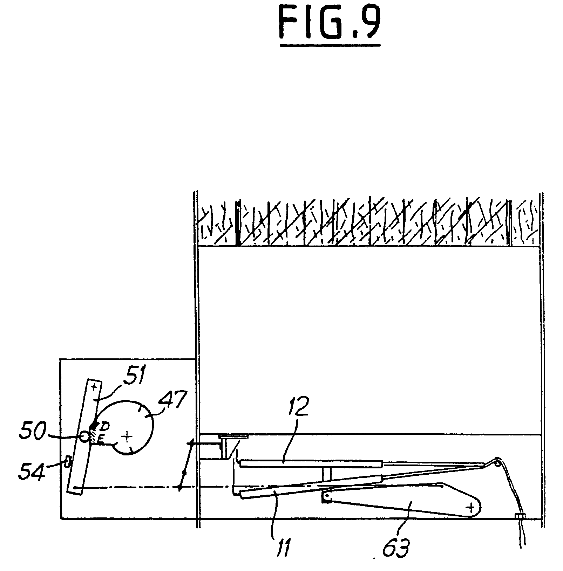

La partie D du profil de la came de programmation 47 autorise un nouveau déplacement des distributeurs 11, 12 (figure 9) qui place l'ensemble des ficelles 13, 14 entre les couteaux 75, 76. La barre de manoeuvre 61 entraîne, au cours de son déplacement, le doigt de commande 73 et le mouvement résultant du bras 71 actionne le couteau mobile 75.

La partie E du profil de la came de programmation 47 autorise un nouveau déplacement des distributeurs 11, 12 (figure 9) jusqu'à ce que la bielle 51 actionne le contacteur de fin de course 54 qui arrête le moto-réducteur 42. A la suite de cet arrêt la balle qui a été liée est éjectée de la presse.

La remise en route du moto-réducteur 42 s'effectue manuellement ou automatiquement à partir du poste de pilotage de la presse lorsque la balle suivante est achevée et lorsqu'elle est prête à être liée. Le sommet du profil de la came de programmation 47 passe alors devant l'organe d'entraînement 50 et celui-ci revient dans sa position de départ décrite précédemment sur la partie A du profil. Le ressort de rappel 53 se détend simultanément au passage et permet aux distributeurs 11, 12 de revenir rapidement à leur position initiale.

## Revendications

1. Presse à fourrage pour la production de balles roulées, du type présentant une chambre de formage (3) dans laquelle le fourrage introduit sous la forme d'une nappe est enroulé sur lui-même autour d'un axe horizontal fictif (XX') et, monté sur un support (6), un mécanisme de liage (10) à deux bras de guidage de liens (11, 12) qui possèdent chacun une sortie pour des liens (13, 14) et qui sont montés mobiles sous l'action d'un moyen de commande (40) pour effectuer un déplacement alternatif le long de la chambre de formage (3) à partir d'une position de départ de liage près d'une extrémité de la chambre jusqu'à une position de fin de liage près de l'extrémité opposée de la chambre, un organe d'actionnement (60) comprenant une bielle oscillante (51) articulée sur le support (6) étant interposé mécaniquement entre le moyen commande (40) et les distributeurs (11, 12) pour entraîner ces distributeurs de la position de départ de liage jusqu'à la position de fin de liage où un moyen de sectionnement (70) coupe les liens, puis pour rappeler les distributeurs vers la position de départ, caractérisée en ce que les bras de guidage de liens sont constitués par deux tubes distributeurs (11, 12) montés à rotation autour d'un même axe (Y) solidaire de la paroi latérale du support (6) du mécanisme de liage et qui sont reliés à la bielle oscillante (51) par l'intermédiaire d'un levier (63) pivotant sur le support (6) du mécanisme de liage et attelé à une extrémité de l'organe d'actionnement (60, 61) dont l'autre extrémité est articulée à l'extrémité de la bielle oscillante (51) qui, d'une part, porte un organe d'entraînement (50) en appui sur le profil d'une came de programmation (47) entraînée en rotation au cours du liage et sur laquelle bielle, d'autre part, est accroché un ressort (53) de rappel de la bielle oscillante (51) pour appliquer l'organe d'entraînement (50) en appui sur le profil de came, de manière que la rotation de la came de programmation (47) provoque le déplacement alternatif de l'organe d'actionnement (61, 61) et en ce que la liaison mécanique entre les tubes distributeurs (11, 12) et l'extrémité du levier (63) opposée à l'articulation de celui-ci sur le support (6) du mécanisme de liage, est réalisée à l'aide d'un doigt d'entraînement (64) qui est, d'une part, relié à une butée d'entraînement (31) portée par le premier tube de distributeur (11) et qui est, d'autre part, mobile dans une lumière (33) d'une butée d'entraînement (32) portée par le deuxième tube distributeur (12), de manière à permettre, au cours du déplacement de ladite extrémité du levier (63), d'entraîner temporairement uniquement le premier tube distributeur (11) et par voie de conséquence successivement puis simultanément les deux tubes distributeurs (11, 12).

2. Presse selon la revendication 1, caractérisée en ce que la came de programmation (47) est solidaire en rotation d'une roue dentée (46) qui coopère avec un cliquet de commande (48) solidaire d'une manivelle d'actionnement (44).

3. Presse selon les revendications 1 et 2, caractérisée en ce que l'organe d'actionnement (60) est relié mécaniquement à un moyen d'actionnement pivotant (71, 72, 73) du moyen de sectionnement (70).

4. Presse selon les revendications 1 à 3, caractérisée en ce qu'une partie (B) du profil de la came de programmation (47) coopère avec l'organe d'entraînement (50) pour modifier la position relative des tubes distributeurs (11, 12).

5. Presse selon les revendications 1 à 4, caractérisée en ce que les deux tubes distributeurs (11, 12) présentent, entre eux, un décalage angulaire initial (a).

6. Presse selon la revendication 5, caractérisée en ce que le décalage angulaire (a) est réglable à l'aide d'un moyen de butée (65).

**Patentansprüche**

1. Rundballenpresse des Typs mit einer Presskammer (3), wobei das Futtermittel in Form eines Wickels eingegeben und um sich selbst um eine fiktive horizontale Achse (XX') gewickelt wird und, auf eine Halterung (6) montiert, einem Bindemechanismus (10) mit zwei Garnleitarmen (11, 12) die jeder einen Ausgang für Garn (13, 14) aufweisen und die durch ein Steuermittel (40) bewegbar montiert werden zur Hin- und Herbewegung entlang der Presskammer (3) von einer Binde-Ausgangsposition aus nahe dem einen Ende der Kammer bis zu einer Binde-Endposition nahe dem entgegengesetzten Ende der Kammer, wobei ein Betätigungsorgan (60), wobei eine frei auf der Halterung bewegliche Schwinge (51) mechanisch zwischen Steuermittel (40) und Verteiler (11, 12) geschaltet ist, um die Verteiler von der Ausgangsposition zur Endposition zu bringen, wo eine Trennvorrichtung (70) die Garne schneidet, um dann die Verteiler zur Ausgansposition zurückzurufen, dadurch gekennzeichnet, dass die Garnleitarme aus zwei Verteilrohren (11, 12) bestehen, welche drehbar auf einer mit der Seitenwandung der Halterung (6) des Bindemechanismus festverbundenen Achse (Y) montiert und mit der Schwinge (51) mittels eines auf der Halterung des Bindemechanismus schwenkbaren und an das eine Ende des Betätigungsorgans (60, 61) gekuppelten Hebels (63) verbunden sind, wobei das andere Ende des Betätigungshebels am Ende der Schwinge (51) schwenkbar befestigt ist, die einerseits ein auf das Profil einer Programmierungsnocke (47) gedrücktes und beim Bindevorgang gedrehtes Antriebsorgan (50) trägt und an welche Schwinge andererseits eine Feder für die Rückwärtsbewegung (53) der Schwinge (51), um das Antriebsorgan (50) an die Nockenform zu drücken, derart angehakt ist, dass das Rotieren der Programmierungsnocke (47) die Hin- und Herbewegung des Antriebsorgans (60, 61) derart einleitet, dass die mechanische Verbindung zwischen den Verteilrohren (11, 12) und dem Ende des Hebels (63), das dessen Gelenk an der Halterung (6) des Bindemechanismus gegenüberliegt, erfolgt mittels eines Antriebsfingers (64), der einerseits mit einem Antriebsanschlag (31) verbunden ist, welcher durch das erste Verteilrohr (11) getragen wird, und welcher andererseits in einem Schlitz (33) des Antriebsanschlags (32) bewegbar montiert ist, welcher durch das zweite Verteilrohr (12) derart getragen ist, dass beim Weiterbewegen des Hebels (63) vorübergehend nur das erste Verteilrohr (11) mitzunehmen ermöglicht wird und im folgenden nacheinander, dann gleichzeitig die beiden Verteilrohre (11, 12) mitzunehmen ermöglicht wird.

2. Presse nach Anspruch 1 dadurch gekennzeichnet, dass die Programmierungsnocke (47) mit einem Zahnrad (46) drehfest ist, wobei das Zahnrad mit einer Betätigungskurbel (44) festverbundenen Steuerklinke (48) zusammenarbeitet.

3. Presse nach Ansprüchen 1 und 2, dadurch gekennzeichnet, dass das Betätigungsorgan (60) mit einem schwenkbaren Betätigungsmittel (71, 72, 73) der Trennvorrichtung (70) wirkverbunden ist.

4. Presse nach Ansprüchen 1 bis 3, dadurch gekennzeichnet, dass ein Teil (B) der Form der Programmierungsnocke (47) mit dem Antriebsorgan (50) zusammenarbeitet, um die relative Position der Verteilrohre (11, 12) zu ändern.

5. Presse nach Ansprüchen 1 bis 4, dadurch gekennzeichnet, dass die beiden Verteilrohre (11, 12) zueinander eine Anfangswinkelverschiebung (a) aufweisen.

6. Presse nach Anspruch 5, dadurch gekennzeichnet, dass die Winkelverschiebung (a) mittels eines Anschlagsmittels (65) einstellbar ist.

## Claims

1. Crop rotobaler for producing wrapped bales, of the type provided with a shaping chamber (3) in which the crop introduced in the form of a layer is wrapped about itself around a theoretical horizontal axis (XX') and, mounted on a support (6), a binding mechanism (10) having two guiding arms for binding (11, 12) each of which is provided with an output for the binders (13, 14) and which are moveably mounted under the action of control means (40) in order to carry out an alternative displacement along the shaping chamber (3) from an initial binding position close to one end of the chamber until an end binding position close to the opposite end of the chamber, an actuating member (60) comprising an oscillating link (51) pivotally connected to the support (6) being mechanically interposed between the control means (40) and the distributors (11, 12) for engaging these distributors from the initial binding position up to the final binding position where sectioning means (70) cuts the binders, then for returning the distributors towards the initial position, characterized in that the binder guiding arms are constituted by two distributor tubes (11, 12) mounted rotatively about a single axis (Y) integral with the lateral support wall (6) of the binding mechanism and which are connected to the oscillating link (51) through the intermediary of a lever (63) pivoting on the support (6) of the binding mechanism and connected to one end of the actuating element (60, 61) the other end of which is pivotally linked to the end of the oscillating link (51) which, on the one hand, bears a driving member (50) resting on the outline of a programming cam (47) driven in rotation during binding and onto said link, on the other hand, is attached a return spring (53) of the oscillating link (51) in order to apply the driving member (50) resting on the outline of the cam, so that the rotation of the programming cam (37) drives the alternative displacement of the actuating member (60, 61) and in that the mechanical association between the distributor tubes (11, 12) and the end of the lever (63) opposite its linking connection to the support (6) of the binding mechanism, is carried out by means of a driving finger (64) which is, on the one hand, connected to a driving abutment (31) borne by the first distributor tube (11) and which is, on the other hand, moveable in a slot (33) of a driving abutment (32) borne by the second distributor tube (12), so as to allow, during displacement of said end of the lever (63), to drive temporarily only the first distributor tube (11) and therefore successively then simultaneously the two distributor tubes (11, 12) .

2. Baler according to claim 1, characterized in that the programming cam is integral in rotation with a toothed wheel (46) that cooperates with a control ratchet integral with an actuating crank (44).

3. Baler according to claims 1 and 2, characterized in that the actuating member (60) is mechanically connected to pivoting actuating means (71, 72, 73) by cutting means (70).

4. Baler according to claims 1 to 3, characterized in that a part (B) of the outline of the programming cam (47) cooperates with the driving member (50) in order to modify the relative position of the distributor tubes (11, 12).

5. Baler according to claims 1 to 4, characterized in that the two distributor tubes (11, 12) present, between each other, an initial angular displacement (a).

6. Press according to claim 5, characterized in that the angular displacement (a) is adjustable through abutment means (65).

# FIG.1

EP 0 192 904 B1

FIG.2

EP 0 192 904 B1

# FIG.3

# FIG.4

# FIG.5

# FIG.6

# FIG.7

# FIG. 8a

# FIG. 8b

# FIG.9